# EUROPEAN PATENT APPLICATION

(11) **EP 3 543 879 A1**
(43) Date of publication of application: **25.09.2019**
(21) Application number: 16925396.0
(22) Date of filing: 27.12.2016
(51) Int. Cl.: G06F 19/00, B29C 45/17, B29C 33/00

(54) **MONITORING SYSTEM FOR INJECTION MOULDS**

(71) Applicant: Plastiasite, S.A., 08290 Cerdanyola Del Vallès, Barcelona (ES)
(72) Inventor: RUBIRALTA ALCAÑIZ, Javier, 08290 Cerdanyola Del Vallès, Barcelona (ES)
(74) Representative: Espiell Gomez, Ignacio
(86) International application number: PCT/ES2016/070940
(87) International publication number: WO 2018/122422

(57) **Abstract**

The invention relates to a data monitoring system for injection moulds, for collecting and transmitting data produced and collected during injection processes, which comprises a monitoring device (13) for monitoring a mould (1), which is provided with an integrated circuit (12), the system being provided with: a computer (17) for storing various signals from respective sensors (8) situated in the mould (1), mould-holder or the machine itself; a memory (16) for saving the data; a communication device (18) for communication the data to external reading means; a housing (11) on the mould for housing the monitoring device; a data module (10) of the mould (1), which has an integrated circuit (4) and is provided with an editable memory (5) for storing historical information concerning the mould; and a communication module (6) for communicating between the integrated circuit and an external computer for editing and reading the information.

## Description

### Technical sector of the invention

This invention refers to a data monitoring system for injection moulds, namely thermoplastics, for the collection and transmission of the data produced and collected during the injection processes.

The mould in question can be any one containing the shape of the part to be produced, being the preferred, although not the sole, an injection mould of thermoplastics, namely for the mass production of automotive plastic components. For non-limiting purpose, many other applications can be mentioned such as light alloys injection (Aluminum, Zamak, etc.) or thermostables, injection-blowing of thermoplastics, extrusion-blowing of thermoplastics, compression of thermostables, moulding of composites, combined cycle machines and thermoforming machines.

### Background of the invention

In the application for patent WO0204186A1, is disclosed a plastic injection mould in which means have been provided to store information with respect to the mould itself, an injection moulding machine in which the said mould can be installed and one or more production processes or the materials to be processed, so that when a change occurs in the process of production it is possible to keep in the said storage means the relevant variables that set the working conditions of the mould and of the machine for adjusting the production specific parameters and also to unequivocally identify the mould. The said means to store the information can include a microprocessor and a standard interface has been provided for the connexion with any injection machine.

The patent US7580771B2 discloses an injection moulding machine comprising a memory device integrated in the mould and that can be read by a controller of the machine associated to a plurality of sensors, the said memory including data for the follow-up of the part to be mould in the moulding machine involving at least the geometry and ticknesses of a series of portions of the said part to be moulded.

The application for patent WO2011050467A1 discloses a database for an injection mould that can be stored in a memory physically associated to an injection mould or external to it in which is contained the information of a plurality of moulding configurations defined by the association of a mould with one or more auxiliary components and programming data for the said auxiliary components. A method is disclosed for carrying out operations of injection moulding in which a production cycle is programmed of a moulded part taking the information of the said database.

The application for patent ES2532750A1 provides a method and a smart control system of a production tooling , that provides an evolution of the said former proposals, envisaging the use of an expert system that generates an expert model of the process included in a smart module joined to a production tooling, namely a thermoplastics injection mould , the said expert model being used to assess a plurality of variables of the process in each production cycle in a stage of autonomous production and for ordering the actions of control operating by means of actuators controlled by the said smart module joined to the tooling on a given parameter or simultaneously on a set of parameters of the process included in the said expert model.

However, the solution provided by the application ES2532750A1 gave rise to complex developments and having a great volume, a low practical operativity and excessive cost as for their application in the modern injection moulds, that often have scarce space to locate additional elements.

In addition, the above-mentioned systems, provide solutions that, although being acceptable, are easily reengineered and therefore could be easily copied, therefore it was sought that the development of this invention to be included in the state-of-art through an application for the registration of patent.

This invention has the aim to overcome the said drawbacks.

### Explanation of the invention

For such purpose, the object of this invention is an information storage and reading system for injection moulds, namely of thermoplastics, of the type of those mentioned at the beginning, having a new concept and functionality, that in its essence is characterized by the characterizing part of the claim 1.

In the claim 2 and successive preferred embodiments of the system of this invention are disclosed.

### Short description of the drawings

Thereafter, a detailed description of ways of preferred although not exclusive embodiments are given, of the data monitoring system for injection moulds, object of this invention, for a best understanding of which a set of drawings is attached in which are illustrated, for non-limiting example purpose, embodiments of this invention. In the said drawings:
The fig. 1 is a view in perspective that illustrates a first embodiment of the system of this invention, in which the monitoring device is enclosed in a cylindrical casing;
The fig. 2 is a variant of the monitoring device of the Fig. 1, that comprises in addition a module of data of the mould and/or of the injection machine, enclosed in the mentioned cylindrical casing;
The fig. 3 is a view in perspective that illustrates the second embodiment of the monitoring device in a parallelepiped-shaped of the protecting casing;The Fig. 4 illustrates the monitoring system according to this invention, in a variant of the parallelepipedal shape of the casing, in which the monitoring device, the casing and, eventually, the module of data of the mould are superficially mounted on the injection mould; and
the Fig. 5 represents the monitoring system of this invention, in a variant of the parallelepipedal shape of the casing, in which this later, is arranged in a rectangular section recess made in the injection mould itself;

### Detailed description of the drawings

In the said drawings are shown the structure and the operating mode of the data monitoring system for injection moulds, namely of thermoplastics, for the collection and transmission of the data produced and collected during the injection processes, of the type they comprise.

The system comprises a monitoring device (13) encapsulated and arranged in an ad hoc recess provided in the mould (1), counter-mould or in the injection machine itself in which the process that is sought to be monitored is carried out.

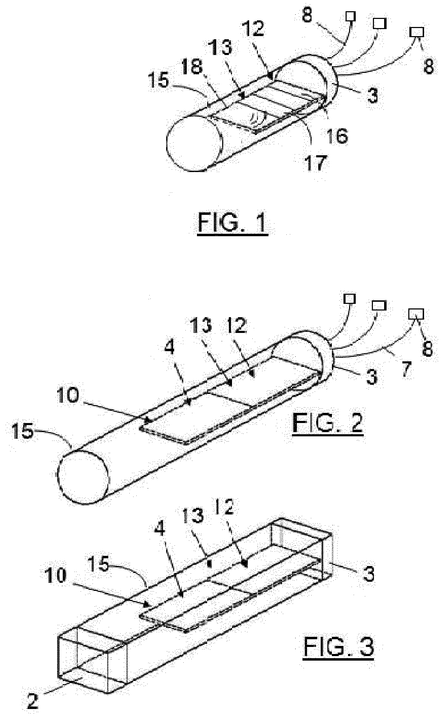

In the Fig 1, it can be clearly seen that the monitoring device (13) of the system, is based in an integrated circuit (12), provided with a computer (17) for the storage of different signals coming from respective sensors (8) located in the mould (1), in the mould-carrier or in the machine itself; a memory (16) to keep the said data; and a communication device (18) to communicate the said data to external reading means.

Among these sensors (8) they can be T, P, speed, distance, number of parts, servomotors output, etc. sensors.

The measures of the signals coming from the sensors (8) have access to the monitoring devices through each respective cables (7), through a connector (3). The communication of the sensors (8) with the monitoring device (13) can also be carried out wireless provided that the technical conditions allow it.

Preferably the monitoring device (13) of the system is completed with a data module (10) of the mould (1), and/or the machine, that comprises an integrated circuit (12), provided with:
- an editable memory for the storage of historic information ("*tracking*") relating to the mould (1), including key dates, results of operations of injection , drawings, history of failures or incidents, data and locations of the machines in which it has worked, types and quantity of units produced associated to dates and locations, defects, etc.; and with
- a module of communications between the integrated circuit (12) and an external computer for editing and reading the said information.

The data module device (10) of the mould (1) can comprise a connector (2) of electrical-electronic connections.

The size of the above-mentioned connector (3), is preferably a size practically the same as the size of the integrated circuit (13). In the example appearing in the Fig. 1 and 2, the connector (3) is cylindrical, and the transversal dimension of the monitoring device (13) is ranging from 1 to 0.8 times the diameter of the connector (3), although in general it can be ranging from 1.2 to 0.8 times.

The integrated circuits (4, 12) can be arranged within a protecting casing (15), including the possibility to be encapsulated and embedded in a plastic material, for concealing them. In the Figs. 1 and 2 examples of embodiment of the casing (15) are shown, in which this later is cylindrical, while in the Figs. 3 to 5 examples are illustrated in which the casing (15) is pallelepiped-shaped. The casing (15) can have any size and it can be used to protect the integrated circuits (4, 12) as well mechanically as from the high temperatures that can exist in the recess (11).

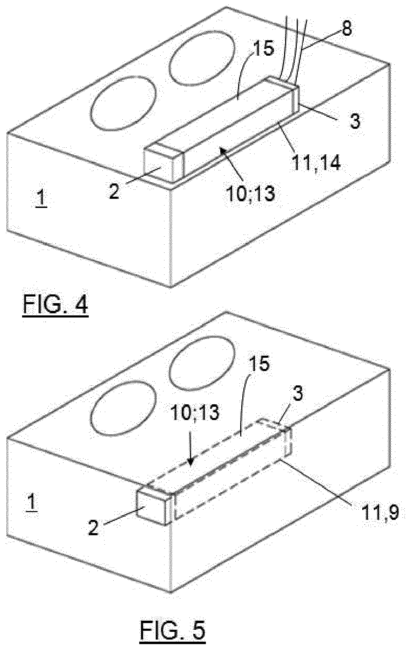

As for the casing (11) in the mould (1), in the Fig. 5 an example is shown in which the said recess (11) is constituted by a cavity (9) produced to that effect in the moulds (1) themselves. In the Fig. 4 a variant is shown in which, on the contrary, the recess (11) is a mounting area or surface (14) arranged on the surface of the mould (1). In this case, it corresponds to the embodiment of the Fig. 3. It shall be understood that the monitoring device (13) and, eventually, the data module (10) of the mould, can also be housed in the counter-mould or in some of the mould or counter- mould platens.

The nature of this invention being sufficiently disclosed as well as the way of implementing it, it is stated that anything that provided it does not alter, change or modify its main principle, it can be subject to variations of details.

## Claims

1. Data monitoring system for injection moulds, namely of thermoplastics, for the collection and transmission of the data produced and collected during the injection processes, **characterized in that** it comprises a monitoring device (13) of a mould (1), that possesses an integrated circuit (12), provided with:
- a computer (17) for the storage of different signals coming from respective sensors (8) located in the mould (1), in the mould-carrier or in the machine itself;
- a memory (16) to keep the said data;
- a communication device (18) to communicate the said data to external reading means; and with
- a recess (11) in the mould (1), to arrange the monitoring device (13).

2. Data monitoring system, according to the claim 1, **characterized in that** it comprises, in addition: a data module (10) of the mould (1) that possesses an integrated circuit (4), provided with:
- an editable memory (5) for the storage of the historic information relative to the mould; and with
- a communication module (6) between the integrated circuit and an external computer for editing and reading the said information,

3. Data monitoring system, according to the claims 1 or 2 , **characterized in that** the said data modules (10) of the mould (1) and/or the said monitoring device (13), are provided each with connectors (2, 3) of electrical-electronic connection, having a size virtually equal to the size of the corresponding integrated circuits (4, 12).

4. Data monitoring system, according to the claim 1, **characterized in that** the said sensors (8) pertain to the group formed by: T, P, speed, distance, number of parts, output of servomotors.

5. Data monitoring system, according to the claim 1, **characterized in that** the said recess (11) is a cavity (9) in the mould (1).

6. Data monitoring system, according to the claim 1, **characterized in that** the said recess (11) is a mounting surface (14) arranged on the mould (1).

7. Data monitoring system, according to the claim 1 or 2, **characterized in that** the said integrated circuits (4, 12) are encapsulated within a protecting casing (15).

8. Data monitoring system, according to the claim 7, **characterized in that** the said protecting casing (15) is cylindrical.

9. Data monitoring system, according to the claim 7, **characterized in that** the said protecting casing (15) is parallelepipedal.
